(19) Europäisches Patentamt
European Patent Office
Office européen des brevets

(11) EP 4 703 152 A1

(12) EUROPEAN PATENT APPLICATION

(43) Date of publication:
**04.03.2026 Bulletin 2026/10**

(21) Application number: **25191769.6**

(22) Date of filing: **25.07.2025**

(51) International Patent Classification (IPC):
***B60C 9/00*** *(2006.01)* ***B60C 11/00*** *(2006.01)*

(52) Cooperative Patent Classification (CPC):
**B60C 11/0008; B60C 9/0042; B60C 11/005;**
B60C 2011/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.08.2024 JP 2024144220**
**23.06.2025 JP 2025105891**

(71) Applicant: **SUMITOMO RUBBER INDUSTRIES, LTD.**
**Kobe-shi, Hyogo 651-0072 (JP)**

(72) Inventor: **OKABE, Noboru**
**Kobe-shi, 651-0072 (JP)**

(74) Representative: **TBK**
**Bavariaring 4-6**
**80336 München (DE)**

(54) **TIRE**

(57) An object of the present invention is to reduce the environmental impact and save resources, while further improving the ride comfort performance of tires when running at high speeds, and provides is a tire comprises a tread portion having a cap rubber layer, and a carcass portion, in which sustainable polyester cords are used as ply cords in the carcass ply that constitutes the carcass portion, and the complex elastic modulus E* (MPa) of the cap rubber layer measured under the conditions of a temperature of 30°C, an initial strain of 5%, a dynamic strain of 1%, a frequency of 10 Hz, and a deformation mode; tensile, and the thickness A (mm) of the center portion of the tread portion satisfy the following formula.

$$E^*/A \leqq 0.75$$

FIG. 1

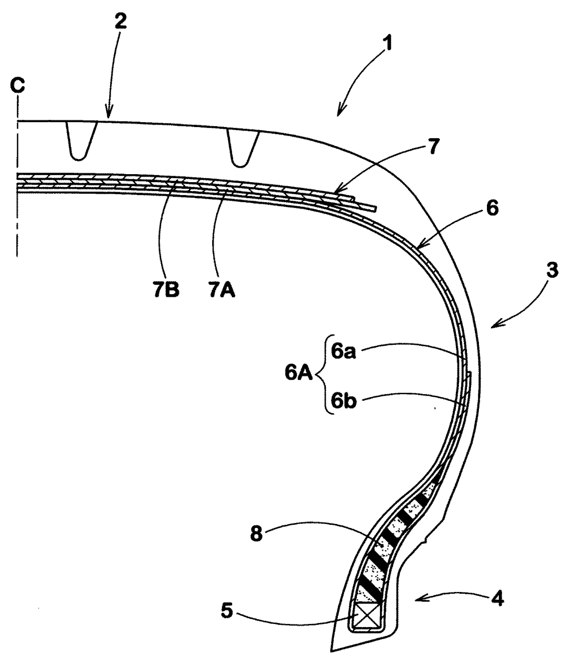




Processed by Luminess, 75001 PARIS (FR)

## Description

[TECHNICAL FIELD]

The present invention relates to a tire.

[BACKGROUND ART]

With the recent construction of expressways, it is not uncommon to travel long distances on expressways. In response to this situation, there is a strong demand for tires with improved ride comfort performance when running at high speeds, and various proposals have been made (for example,

Patent documents 1 and 2).

Furthermore, in recent years, there has been a strong demand for reducing the environmental impact and saving resources, and this also applies to tires, so there is a demand for using sustainable materials (for example, Patent document 3).

[Prior art documents]

[Patent documents]

[Patent document 1] JP 4621127 B
[Patent document 2] JP 2023-021772 A
[Patent document 3] JP 2023-23658 A

[SUMMARY OF THE INVENTION]

[PROBLEM TO BE SOLVED BY THE INVENTION]

However, the ride comfort performance of tires using sustainable materials when running at high speeds is still not sufficient, and further improvement is desired.
An object of the present invention is to reduce the environmental impact and save resources, while also further improving the ride comfort performance during running at high speeds.

[MEANS FOR SOLVING THE PROBLEM]

The present invention is;

a tire comprising a tread portion having a cap rubber layer and a carcass portion, wherein,
a sustainable polyester cord is used as a ply cord in the carcass ply constituting the carcass portion,

E* (MPa) of the cap rubber layer measured under conditions of a temperature of 30°C, an initial strain of 5%, a dynamic strain of 1%, a frequency of 10 Hz, and a deformation mode; tensile, and the thickness A (mm) of the center portion of the tread portion satisfy the following formula.

$$E^*/A \leqq 0.75$$

[EFFECT OF THE INVENTION]

According to the present invention, it is possible to reduce the environmental impact and save resources, and also to further improve the ride comfort performance when running at high speeds.

[BRIEF EXPLANATION OF DRAWINGS]

FIG. 1 is a schematic cross-sectional view illustrating the structure of a tire according to one embodiment of the present invention.

[EMBODIMENTS FOR CARRYING OUT THE INVENTION]

[1] Features of the tire according to the present invention

First, the features of the tire according to the present invention will be described.

1. Overview

The tire according to the present invention comprises a tread portion having a cap rubber layer and a carcass portion, and a sustainable polyester cord is used as a ply cord in the carcass ply constituting the carcass portion. And, the complex elastic modulus E* (MPa) of the cap rubber layer measured under the conditions of temperature 30°C, initial strain 5%, dynamic strain 1 %, frequency 10 Hz, and deformation mode: tensile, and the thickness A (mm) at the center portion (tread center portion) of the tread portion satisfy the following formula:

$$E^{*}/A \leqq 0.75$$

These features, as will be described later, make it possible to reduce the environmental impact and save resources, while also achieving a further improvement in ride comfort when running at high speeds.

2. Mechanism of effect manifestation in the tire according to the present invention

The mechanism by which the tire according to the present invention exhibits the effect of improving ride comfort during high-speed running is believed to be as follows.

(1) Use of sustainable cord in carcass ply

As described above, the sustainable polyester cord is used as a ply cord in the carcass ply that constitutes the carcass portion.

during driving.

Since polyester cords have high elasticity and small modulus, when they are used as ply cords to make carcass plies, it is believed that they will exhibit a significant shock absorbing effect and improve the ride comfort performance during high-speed running. If sustainable polyester cords could be used, it would be preferable because it would help reduce the environmental impact and save resources.

Here, "sustainable polyester cord" refers to cord made entirely or in part from sustainable polyester, such as recycled polyester made from plastic waste such as PET bottles or old clothing, and bio-polyester made from bio-derived raw materials.

(2) Complex elastic modulus of the cap rubber layer and thickness of the tread center

However, because the raw materials and/or manufacturing methods of sustainable polyester cords are different from those of general-purpose polyethylene terephthalate cords, there is a risk that the performance of the cords will not be fully demonstrated.

Therefore, in the present invention, as described above, the complex elastic modulus E* (MPa) of the cap rubber layer measured under conditions of a temperature of 30°C, an initial strain of 5%, a dynamic strain of 1%, a frequency of 10 Hz, and a deformation mode: tensile, and the thickness A (mm) at the center of the tread portion are controlled to satisfy the following formula.

$$E^{*}/A \leqq 0.75$$

The complex elastic modulus is a parameter that indicates the rigidity of the rubber layer. By making the complex

elastic modulus E* of the cap rubber layer small relative to the thickness A at the center of the tread portion 0.75 or less (E* /A ≦ 0.75), an impact absorption effect is exerted in the tread portion. Therefore, even if sustainable polyester cord is used as the ply cord, it is believed that the ride comfort performance during high-speed running can be further improved in cooperation with the impact absorption effect of the carcass ply using the above-mentioned ply cord.

In the above, the complex elastic modulus can be measured by using a dynamic viscoelasticity measuring device (e.g., the Eplexer series (registered trademark) manufactured by GABO Corporation) for a test piece of 20 mm in length × 4 mm in width × 1 mm in thickness, cut out from the cap rubber layer of the tread portion of the tire so that the long side is in the tire circumferential direction and the thickness direction is in the tire radial direction.

The thickness of the center of the tread portion refers to the thickness of the tread at the tire's equatorial plane in the radial cross section. In the case where the tire has grooves on the equatorial plane of the tire, the thickness refers to the thickness from the intersection of a straight line connecting the radially outermost end points of the grooves with the tire equatorial plane to the radially innermost interface of the tread portion.

The tread portion is a member of the region that forms the contact surface of the tire, and refers to the portion radially outward of the members that contain fiber materials such as the carcass, belt layer, and belt reinforcing layer. The thickness of the tread portion can be measured by aligning the bead portion with the standardized rim width in a cross section cut out in the radial direction of the tire.

Here, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

[2] More preferred embodiments of the tire according to the present invention

The tire according to the present invention can achieve even greater effects by adopting the following aspects.

1. Multi-layered tread

In the present invention, the tread portion may be formed of only one layer, that is, a cap rubber layer, but it may also be formed of two layers by providing a base rubber layer inside the cap rubber layer, or it may be formed of three layers, or it may be formed of four or more layers.

In this way, when the tread portion is multi-layered, the thickness of the cap rubber layer in the entire tread portion is preferably 10% or more. This makes it possible to generate sufficient friction between the tread portion surface and the road surface and transmit the frictional force sufficiently to the inside of the tire even during high-speed runing, so that it is believed that the grip performance is improved and the ride comfort performance during high-speed running can be further improved. In addition, considering the generation of friction between the tread portion surface and the road surface, the thickness of the cap rubber layer is more preferably 70% or more, and further preferably 80% or more.

The ratio of the thickness of the cap rubber layer in the entire tread portion can be calculated by determining the thickness of the cap rubber layer and the thickness of the base rubber layer in the thickness of the tread portion. When a groove is present on the tire equatorial plane, the ratio of the thickness of the cap rubber layer in the entire tread portion described above can be calculated by calculating the thickness of the cap rubber layer and the thickness of the base rubber layer at the center of the land portion of the tread portion closest to the equatorial plane.

As described above, the tread portion is a member of the region that forms the contact surface of the tire, and refers to the portion radially outward of the members that contain fiber materials such as the carcass, belt layer, and belt reinforcing layer.

2. Complex elastic modulus of the cap rubber layer and thickness of the tread center portion

In the present invention, as described above, (E* / A) is controlled to be 0.75 or less (E* /A ≦ 0.75), but from the viewpoint of the effect of the present invention (improvement of ride comfort performance during high-speed running), it is preferably 0.65 or less, 0.64 or less, 0.54 or less, and 0.46 or less. On the other hand, from another viewpoint (view point of durability), it is preferably 0.45 or more, 0.53 or more, 0.55 or more, and preferably 0.63 or less.

The complex elastic modulus of the cap rubber layer can be appropriately adjusted by adjusting, for example, the amount of styrene in the rubber component (polymer), the amount of filler such as silica or carbon black, the content of the softener component, the content of the resin component, etc., in the rubber composition (cap rubber composition)

constituting the cap rubber layer. Specifically, for example, the complex elastic modulus can be increased by increasing the amount of styrene in the rubber component (polymer), increasing the amount of filler such as silica or carbon black, decreasing the content of the softener component, increasing the content of the resin component, etc., while the complex elastic modulus can be decreased by decreasing the amount of styrene in the polymer, decreasing the amount of filler such as silica or carbon black, increasing the content of the softener component, decreasing the content of the resin component, etc.

From the viewpoint of the effect of the present invention (improvement of ride comfort during high-speed running), the complex elastic modulus E* (MPa) of the cap rubber layer in the present invention is preferably 7 MPa or less, and 5 MPa or less.

From the viewpoint of the effect of the present invention (improvement of ride comfort during high-speed running), the thickness A (mm) of the tread center portion in the present invention is preferably 11 mm or more, and more preferably 13 mm or more.

3. Ply cord and its characteristics

(1) Material

In the present invention, sustainable polyester cords are used as ply cords, and among various sustainable polyester cords, it is preferable to use sustainable polyethylene terephthalate (PET) cords, which have higher elasticity and smaller modulus. This allows the carcass to exhibit a greater shock absorbing effect, which is believed to further improve the ride comfort during high-speed running. In addition, it is possible to reduce the environmental impact and save resources.

(2) Cord diameter

Furthermore, by controlling the diameter of the sustainable polyester cord together (cord diameter) with the above-mentioned (E* /A), it is believed that the shock absorbing effect in the tread portion and the shock absorbing effect in the carcass portion are exerted synergistically, thereby enabling further improvement in ride comfort performance during high-speed running.

Specifically, it is believed that by controlling the product (E* /A) and the cord diameter F (mm), (E* /A × F), to be less than 0.59 (E* / A × F < 0.59), it is possible to further improve ride comfort during high-speed running.

From the viewpoint of the effect of the present invention (improvement of ride comfort performance during high-speed running), in the present invention, the above (E* /A × F) is preferably less than 0.45, less than 0.44, less than 0.37, less than 0.36, and less than 0.31, while from another viewpoint (viewpoint of durability), it is preferably 0.30 or more, 0.35 or more, 0.36 or more, 0.43 or more, and 0.62 or more. In addition, from another viewpoint (viewpoint of steering stability), it is preferably less than 0.63.

The above-mentioned cord diameter can be found from the circumscribing circle of a cross section perpendicular to the extension direction of the cord, and refers to the diameter in the case of a perfect circle, and refers to the equivalent circle diameter (the diameter of a circle when a perfect circle with the same cross-sectional area is assumed) in the case of an ellipse or the like.

In the present invention, from the viewpoint of the effect of the present invention (improvement of ride comfort performance during high-speed running), the diameter (cord diameter) of the sustainable cord is preferably 0.55 mm or more, and more preferably 0.68 mm or more. On the other hand, the upper limit is preferably, for example, 0.98 mm or less.

(3) Content of isophthalic acid

When the sustainable polyester cord is a recycled polyester cord regenerated from PET fibers, PET bottles, and the like, isophthalic acid may be contained as an impurity, which may cause the quality of the sustainable polyester cord to become unstable. For this reason, the content of isophthalic acid in the sustainable polyester cord is preferably less than 0.1 mol%, and particularly preferably 0.0 mol%. This is believed to result in a sustainable polyester cord with stable quality, and further improve the ride comfort performance during high-speed running. The isophthalic acid content of the sustainable polyester cord can be measured, for example, by high performance liquid chromatography (HPLC).

From the viewpoint of the effect of the present invention (improvement of ride comfort performance during high-speed running), the relational formula ((E* /A) × F) / (100 - IF) between the content IF (mol %) of isophthalic acid in the sustainable polyester cord and the above-mentioned (E* /A) × F) is preferably less than 0.0063, less than 0.0045, less than 0.0044, less than 0.0037, less than 0.0036, and less than 0.0031. On the other hand, from another viewpoint (viewpoint of durability), it is preferably 0.030 or more, 0.035 or more, 0.036 or more, 0.043 or more, 0.044 or more, 0.062 or more.

(4) Strength (tensile strength)

The strength S (cN/dtex) of the sustainable polyester cord is preferably 6.0 cN/dtex or more. It is believed that by producing a carcass ply using a sustainable polyester cord having such strength, the deformation of the tread portion during high-speed running can be absorbed by the carcass portion, thereby further improving the ride comfort performance during high-speed running. It is more preferred that it is 6.3 cN/dtex or more. As the upper limit, for example, it is preferably 7.0 cN/dtex or less, and more preferably 6.7 cN/dtex or less.

The strength can be measured in accordance with the method specified in "8.5 Tensile strength and elongation" of JIS L1017:2002 "Test methods for synthetic fiber tire cords" (grabbing interval of 250 mm, tensile speed of 300 mm /min).

In the present invention, the total fineness (dtex) of the sustainable polyester cord is preferably 2200 dtex or more, and more preferably 3340 dtex or more. On the other hand, the upper limit is preferably, for example, 6600 dtex or less.

The total fineness of a sustainable polyester cord is the sum of the finenesses of each yarn, including the polyester fiber, that forms the cord, measured in accordance with the method specified in "8.3 Correct fineness" of JIS L1017 :2002 "Test methods for synthetic fiber tire cords." For a cord formed of one yarn, the total fineness corresponds to the fineness of one yarn, and for a cord formed of multiple yarns, the total fineness corresponds to the sum of the finenesses of the multiple yarns.

For example, the total fineness of the cord structure 1700 dtex / 1 (the cord is composed of only single yarns of 1700 dtex fineness) is 1700 dtex, and the total fineness of the cord structure 1700 dtex / 2 (the cord is composed of two single yarns of 1700 dtex fineness twisted together) is 3400 dtex.

(5) Ends and Strength

The product (S×D) of the strength S (cN/dtex) of the sustainable polyester cord and the number (ends) D (cords/5 cm) of the ply cords (sustainable polyester cords) in the tread portion present in a width of 5 cm in a direction perpendicular to the longitudinal direction of the ply cords in the tread portion is preferably 160 or more (S×D ≧ 160). This allows the carcass portion to more sufficiently absorb and suppress deformation of the tread portion during high-speed running, which is believed to further improve ride comfort during high-speed running.

From the viewpoint of the effect of the present invention (improvement of ride comfort during high-speed running), the above-mentioned (S×D) is preferably 192 or more, 201 or more, 214 or more, and 268 or more. On the other hand, from another viewpoint (viewpoint of durability), it is preferably 300 or less, 270 or less, 269 or less, 215 or less, 202 or less, and 193 or less.

In the present invention, the ends of the ply cord is preferably 30 cords/5 cm or more, more preferably 32 cords/5 cm or more, while the upper limit is preferably 40 cords/5 cm or less.

(6) Intermediate elongation and ends

It is preferable that the following formula is satisfied between the intermediate elongation E (%) at a specified load L (cN/dtex) of the sustainable polyester cord and the ends D (cords/5 cm) described above.

$$12 \leqq L \times D/E \leqq 20$$

By appropriately controlling (L × D/E), it is believed that deformation of the tread portion during high-speed running can be more sufficiently absorbed and suppressed by the carcass portion, thereby further improving the ride comfort performance high-speed running.

From the viewpoint of the effect of the present invention (improvement of ride comfort performance during high-speed running), the above-mentioned (L × D/ E) is preferably 13.6 or more, 13.9 or more, 14.0 or more, and 14.9 or more, while, from another viewpoint (viewpoint of durability), it is preferably 28.4 or less, 15.0 or less, 14.0 or less, and13.7 or less. In addition, from another viewpoint (viewpoint of steering stability), it is preferably 28.3 or more.

The above-mentioned intermediate elongation can be measured in accordance with the test method for "elongation at constant load" in JIS L1017:2002; "Test method for synthetic fiber tire cords."

Specifically, when the specified load L described in the next paragraph is 2.0 cN/dtex, the intermediate elongation can be determined by taking a single cord from a vulcanized tire, conducting a tensile test under conditions of a temperature of 100 ± 2°C, a grabbing interval of 250 mm, and a tensile speed of 300 ± 20mm/min, and calculating the elongation (%) at a point on the load-elongation curve corresponding to a load of 2.0 cN/dtex.

In the present invention, when the specified load L is 2.0 cN/dtex, the intermediate elongation is preferably 4.3% or more from the viewpoint of the effect of the present invention (improvement of ride comfort during high-speed running). On the other hand, from another viewpoint (viewpoint of durability), it is preferably 4.7% or less. Furthermore, when the specified load L is 3.0 cN/dtex, it is preferably 4.3% or more.

(7) Breaking elongation

The breaking elongation (%) of the sustainable polyester cord is preferably 10% or more. This allows the carcass portion to more fully absorb and suppress deformation of the tread portion during high-speed running, which is believed to further improve the ride comfort performance during high-speed running. It is more preferably 12% or more, and further preferably 13% or more. There is no particular upper limit, but it is preferably 20% or less, more preferably 18% or less, and further preferably 16% or less.
The breaking elongation can be measured in accordance with the method specified in "8.5 Tensile strength and elongation " of JIS L1017:2002 "Testing methods for synthetic fiber tire cords" (grabbing interval of 250 mm, tensile speed 300 of mm/min).

(8) Moisture and heat resistance strength retention rate

The moist heat resistance strength retention rate (%) of the sustainable polyester cord is preferably 80% or more. This is believed to enable the ride comfort performance during high-speed running to be maintained for a long period of time. It is more preferably 82% or more, further preferably 85% or more, and further preferably 90% or more.
The above-mentioned moist heat resistance strength retention rate can be obtained by calculating the ratio of the strength after treatment with saturated steam at 135°C for 48 hours (moist heat treatment) to the strength before treatment.

4. Ends and (E* /A)

In the present invention, it is preferable that the product ((E* /A) × D) of the ends D (cords/5 cm) of the ply cord (sustainable polyester cord) in the tread portion and the above-mentioned (E* / A) is less than 25.5 ((E* /A) × D < 25.5). Thereby, the effect of using the sustainable polyester cord in the carcass ply and the effect of controlling (E* /A) work together synergistically, and it is believed that the ride comfort performance during high-speed running can be further improved.
From the viewpoint of the effect of the present invention (improvement of ride comfort performance during high-speed running), it is more preferred that ((E* /A) × D) is less than 20.4, less than 19.1, less than 17.3, and less than 14.6. On the other hand, from another viewpoint (viewpoint of durability), it is preferable that ((E*/A) × D) is 14.5 or more, 17.2 or more, 19.0 or more, 20.3 or more, and 25.4 or more.

5. Aspect ratio

The aspect ratio is the ratio of the section height to the section width of the tire, and it is believed that the smaller this ratio (the lower the aspect ratio), the better the contact with the road surface, and therefore the further improvement in ride comfort during high-speed running can be achieved. On the other hand, if the aspect ratio is too low, there is a risk of the ride comfort being deteriorated.
Considering these points, in the tire according to the present invention, the specific aspect ratio is preferably 30% or more. The upper limit is preferably 60% or less, and more preferably 55% or less.
The above aspect ratio (%) can be calculated by the following formula wherein Ht (mm) is tire cross-sectional height, Wt (mm) is cross-sectional width, Dt (mm) is tire outer diameter, and R (mm) is rim diameter when the internal pressure is 250 kPa.

$$\text{Aspect ratio (\%)} = (Ht / Wt) \times 100 \text{ (\%)}$$

$$Ht = (Dt - R) / 2$$

6. Land Ratio

In the tire according to the present invention, the land ratio in the tread portion of the tire mounted on a standardized rim and with the standardized internal pressure is preferably 55% or more, more preferably 60% or more, and further preferably 63% or more.
The "land ratio" is the ratio of the actual contact area to a virtual contact area in which all the grooves on the surface of the tread portion are filled. A larger land ratio results in a larger area in contact with the road surface, and it is believed to improved ground contact and further improve ride comfort during high-speed running.
The upper limit of the land ratio is not particularly limited, but is preferably 85% or less, more preferably 80% or

less, and further preferably 75% or less.

The above-mentioned land ratio can be measured from the ground contact shape under standardized rim, standardized internal pressure, and standardized load conditions.

Specifically, the tire is mounted on a standardized rim, standardized internal pressure is applied, and the tire is left to stand at 25°C for 24 hours. Then, the tire tread surface is painted with ink, and the tire is pressed against cardboard with a standardized load (camber angle is 0°) so that the ink is transferred to paper, and the ground contact shape can be obtained. The tire is rotated 72° in the circumferential direction and the transfer ink is taken place at five locations. That is, the ground contact shape is obtained five times. At this time, about the five ground contact shapes, the parts of the ground contact shapes that are interrupted by the grooves in the contour are smoothly connected, and the obtained shape is defined as the virtual contact surface.

The land ratio can be calculated by (average area of five ground contact shapes (black parts) transferred to cardboard / average area of virtual contact surface obtained from five ground contact shapes) × 100 (%).

In the above, as in the case of "standardized rim", "standardized internal pressure" refers to the air pressure set for each tire by each standard in the standard system including the standard on which the tire is based. For JATMA, it refers to the "maximum air pressure", for ETRTO, it refers to the "INFLATION PRESSURE", and for TRA, it refers to the maximum value listed in the table "TIRE LOAD LIMITS AT VARIOUS COLD INFLATION PRESSURES". As in the case of "standardized rim", JATMA, ETRTO, and TRA are referred to in that order, and their standards are followed. In the case of a tire not specified in the standard, it refers to the standardized internal pressure (note, 250 kPa or more) of another tire size (defined in the standard) that is described with the standardized rim as the standard rim. Note that, if multiple standardized internal pressures of 250 kPa or more are listed, it refers to the minimum value among them.

The "standardized load" is the load determined for each tire by each standard in the standard system including the standard on which the tire is based, and refers to the maximum mass that can be loaded on the tire. In the case of JATMA, it refers to the maximum load capacity, in the case of ETRTO, it refers to the "LOAD CAPACITY", and in the case of TRA, it refers to the maximum value described in the table "TIRE LOAD LIMITS AT VARIOUS COLD INFLATION PRESSURES". As in the case of the " standardized rim" and " standardized internal pressure" described above, JATMA, ETRTO, and TRA are referred to in that order and their standards are followed. In the case of a tire not determined by a standard, the standardized load $W_L$ is calculated as follows:

$$V=\{(Dt/2)^2 - (Dt/2-Ht)^2\} \times \pi \times Wt$$

$$W_L=0.000011 \times V + 175$$

$W_L$: Standardized load (kg)
V: Virtual volume of the tire ($mm^3$)
Dt: tire outer diameter Dt (mm)
Ht: tire section height (mm)
Wt: tire section width (mm)

[3] Embodiments

Hereinafter, the present invention will be described in detail based on the embodiments.

1. Tire according to the present embodiment

FIG. 1 is a schematic cross-sectional view for explaining the structure of a tire according to the present embodiment, showing a tire meridian cross section including the rotation axis of the tire in a standardized state.

As shown in Fig. 1, the tire 1 has a carcass 6 extending from a tread portion 2 through a sidewall portion 3 to a bead core 5 of a bead portion 4, and a belt layer 7 disposed on the outer side of the carcass 6 and on the inner side of the tread portion 2 in the tire radial direction. C indicates a center line.

The carcass 6 is composed of at least one carcass ply 6A (one in Fig. 1), and is secured by folding back from the inside to the outside around the bead core 5 of the bead portion 4 through the tread portion 2, and sidewall portion 3. In Fig. 1, 6a denotes an inner main body portion of the carcass ply 6A, and 6b denotes an outer folded back portion. Between the inner main body portion 6a and the outer folded back portion 6b, for example, a bead apex rubber 8 extending from the bead core 5 to the outside in the tire radial direction is disposed.

In this embodiment, the carcass ply 6A uses sustainable polyester cords as ply cords, and is configured by covering both sides of a sustainable polyester cord arrangement aligned with a predetermined end with covering rubber.

By forming a carcass portion using such a carcass ply and appropriately forming the thickness of the tread center

portion with a tread having a cap rubber layer with the above-mentioned complex elastic modulus, it is possible to reduce the environmental impact and save resources, and to further improve the ride comfort performance when the tire is running at high speeds.

2. Rubber composition forming the cap rubber layer (cap rubber composition)

In the present embodiment, the cap rubber composition can be obtained by kneading various compounding materials such as a rubber component, a reinforcing agent, oil, a resin material, and an anti-aging agent.

(1) Compounding materials

(a) Rubber component

The rubber component is not particularly limited, and diene-based rubbers, such as isoprene-based rubbers (natural rubber (NR), isoprene rubber (IR), and the like), styrene butadiene rubber (SBR), butadiene rubber (BR), acrylonitrile butadiene rubber (NBR), chloroprene rubber (CR), and butyl rubber (IIR), can be used. These may be used alone or in combination of two or more kinds, and in the present invention, the combination of SBR and BR is preferred.

(a-1) SBR

The weight average molecular weight of SBR is, for example, more than 100,000 and less than 2,000,000. The styrene content of SBR is preferably more than 5% by mass, more preferably more than 10% by mass, and further preferably more than 15% by mass. On the other hand, it is preferably less than 40% by mass, more preferably less than 35% by mass, and further preferably less than 30% by mass.

The vinyl content (1,2-bonded butadiene unit amount) of SBR is preferably more than 5% by mass, more preferably more than 10% by mass, and further preferably more than 15% by mass. On the other hand, it is preferably less than 70% by mass, more preferably less than 40% by mass, and further preferably less than 30% by mass. Note that the structural identification of SBR (measurement of styrene content and vinyl content) can be performed using, for example, a JNM-ECA series device manufactured by JEOL Ltd.

The SBR is not particularly limited, and for example, emulsion polymerized styrene butadiene rubber (E-SBR), solution polymerized styrene butadiene rubber (S-SBR), and the like can be used. SBR may be either non-modified SBR or modified SBR. Further, hydrogenated SBR obtained by hydrogenating the butadiene part in SBR may be used. The hydrogenated SBR may be obtained by subsequently hydrogenating the BR part in SBR, or a similar structure may be obtained by copolymerization of styrene, ethylene, and butadiene.

The modified SBR is preferably an SBR having a functional group that interacts with a filler such as silica. Examples thereof include end-modified SBR (end-modified SBR having the above functional group at the terminal) in which at least one end of the SBR is modified with a compound having the above functional group (modifying agent),

main chain modified SBR having the functional group in the main chain,
main chain terminal modified SBR having the functional group at the main chain and the terminal (for example, a main chain end modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

As the modified SBR, for example, SBR modified with a compound (modifying agent) represented by the following formula can be used.

[Chemical formula 1]

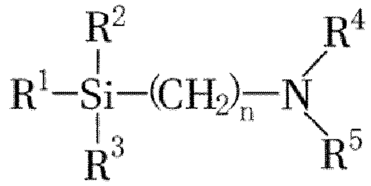

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.
As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.
As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).
Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.
Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl)

aminoethyltrimethoxysilane, and N, N-bis (trimethylsilyl) aminoethyltriethoxysilane;

(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone;

benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;

N- substituted piperidone such as methyl-2-piperidone, N-vinyl-2-piperidone, and N-phenyl-2-piperidone;

N-substituted lactams such as

N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and

N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. The modification with the above compound (modifying agent) can be carried out by a known method.

As the SBR, for example, SBR manufactured and sold by Sumitomo Chemical Co., Ltd., ENEOS Materials Co., Ltd., Asahi Kasei Co., Ltd., Nippon Zeon Co., Ltd., etc. can be used. Note that SBR may be used alone or in combination of two or more.

The content of SBR in 100 parts by mass of the rubber component is preferably 30 parts by mass or more, and more preferably 40 parts by mass or more. The upper limit is, for example, preferably 70 parts by mass or less, and more preferably 60 parts by mass or less.

(a-2) BR

The weight average molecular weight of BR is, for example, more than 100,000 and less than 2,000,000. The vinyl content of BR is, for example, more than 1% by mass and less than 30% by mass. The cis content of BR is, for example, more than 1% by mass and 98% by mass or less. The trans content of BR is, for example, more than 1% by mass and less than 60% by mass. Note that the cis content can be measured by infrared absorption spectroscopy.

The BR is not particularly limited, and BR with a high cis content (cis content of 90% or more), BR with a low cis content, BR containing syndiotactic polybutadiene crystals, etc. can be used. The BR may be either unmodified BR or modified BR. As the modified BR, for example, a BR modified with a compound (modifying agent) represented by the following formula can be used.

[Chemical formula 2]

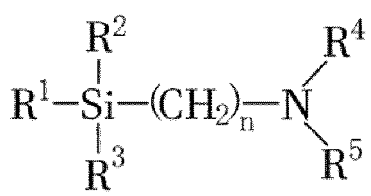

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.

Examples of the modified BR modified with the compound (modifying agent) represented by the above formula include BR whose polymerization end (active end) is modified with the compound represented by the above formula.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group,

benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis- (tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 - bis(methylethylamino)-4-heptanone. The modification with the above compound (modifying agent) can be carried out by a known method. These modified BR may be used alone or in combination of two or more.

As the BR, for example, products manufactured by Ube Industries, Ltd., ENEOS Materials Co., Ltd., Asahi Kasei Co., Ltd., Nippon Zeon Co., Ltd., etc. can be used.

The content of BR in 100 parts by mass of the rubber component is preferably 30 parts by mass or more, and more preferably 40 parts by mass or more, while it is preferably 70 parts by mass or less, and more preferably 60 parts by mass or less.

(a-3) Isoprene-based rubber

As described above, the cap rubber composition preferably uses SBR and BR in combination, but may contain isoprene-based rubber as necessary. In this case, the content of isoprene-based rubber in 100 parts by mass of the rubber component is preferably 20 parts by mass or more, and more preferably 25 parts by mass or more. On the other hand, the upper limit is preferably 40 parts by mass or less, and more preferably 35 parts by mass or less.
Examples of isoprene-based rubber include natural rubber (NR), isoprene rubber (IR), reformed NR, modified NR, and modified IR.
As the NR, for example, SIR20, RSS#3, TSR20, SVR-L, etc., which are common in the tire industry, can be used. As the IR, there is no particular limitation, and for example, IR2200 and the like, which are common in the tire industry, can be used. As the reformed NR, deproteinized natural rubber (DPNR), ultra pure natural rubber (UPNR), and the like can be used. As the modified NR, epoxidized natural rubber (ENR), hydrogenated natural rubber (HNR), grafted natural rubber, and the like can be used. As the modified IR, epoxidized isoprene rubber, hydrogenated isoprene rubber, grafted isoprene rubber, and the like can be used. These may be used alone or in combination of two or more.

(a-4) Other rubber components

The cap rubber composition may contain, as other rubber components, rubbers (polymers) that are commonly used in the manufacture of tires, such as nitrile rubber (NBR), as necessary.
The raw materials (monomers) of the above-mentioned synthetic rubbers such as SBR and BR may be derived from underground resources such as petroleum and natural gas, or may be recycled from rubber products such as tires or non-rubber products such as polystyrene.
Monomers obtained by recycling (recycled monomers) are not particularly limited, and examples thereof include recycled isoprene, recycled butadiene, and recycled aromatic vinyl. Examples of the above-mentioned butadiene include 1,2-butadiene and 1,3-butadiene. Examples of the aromatic vinyl include, but are not particularly limited to, styrene. Among them, it is preferable to use recycle-derived isoprene (recycled isoprene), recycle-derived butadiene (recycled butadiene), and/or recycle-derived styrene (recycled styrene) as raw materials.
The method for producing the recycled monomer is not particularly limited, and examples thereof include synthesis from recycle-derived naphtha obtained by decomposing rubber products such as tires. The method for producing the recycle-derived naphtha is also not particularly limited, and examples thereof include decomposing rubber products such as tires under high temperature and pressure, decomposing with microwaves, or mechanically crushing and then extracting.
Furthermore, the raw materials (monomers) of synthetic rubbers such as IR, SBR, and BR may be derived from biomass. Here, biomass refers to substances derived from natural resources such as plants. Examples of biomass include, but are not limited to, agricultural, forestry, and fishery products, sugar, wood chips, plant residues after useful components are obtained, plant-derived ethanol, and biomass naphtha.
Examples of monomers derived from biomass (biomass monomers) include, but are not limited to, butadiene derived from biomass and aromatic vinyl derived from biomass. Examples of butadiene include 1,2-butadiene and 1,3-butadiene. Examples of aromatic vinyl include, but are not limited to, styrene. In addition, the method for producing biomass monomers is not particularly limited, and examples include biological and/or chemical and/or physical conversion of animals and plants. A representative example of biological conversion is fermentation by microorganisms, and examples of chemical and/or physical conversion include those using catalysts, those using high heat, those using high pressure, those using electromagnetic waves, those using critical liquids, and combinations thereof.
The polymer synthesized from a biomass monomer component (biomass polymer) is not particularly limited, and examples thereof include polybutadiene rubber synthesized from butadiene derived from biomass, aromatic vinyl/butadiene copolymer synthesized from butadiene derived from biomass and/or aromatic vinyl derived from biomass, etc. Examples of the aromatic vinyl/butadiene copolymer include styrene butadiene rubber synthesized from butadiene derived from biomass and/or styrene derived from biomass.
Whether the raw material of a polymer is derived from biomass can be determined by the percent modern carbon (pMC) measured in accordance with ASTM D6866-10.
The pMC is a ratio of the $^{14}C$ concentration of a sample to the $^{14}C$ concentration of a modern standard reference, and this value is used as an index of the biomass ratio of a compound. The significance of this value will be described below.
In one mole of carbon atoms ($6.02 \times 10^{23}$), there are about $6.02 \times 10^{11}$ $^{14}C$, which is about one trillionth of the number of normal carbon atoms. $^{14}C$ is called a radioisotope, and its half-life is 5730 years, and it decreases regularly. It takes 226,000 years for all of them to decay. Therefore, in fossil fuels such as coal, oil, and natural gas, which are thought to have passed more than 226,000 years after carbon dioxide in the atmosphere was absorbed and fixed to plants and other things, all of the $^{14}C$ elements that were contained in them at the time of fixation have decayed. Therefore, in the present 21st century, fossil fuels such as coal, oil, and natural gas do not contain any $^{14}C$ elements at all. Therefore, chemical

substances produced using these fossil fuels as raw materials do not contain any $^{14}C$ elements at all.

On the other hand, $^{14}C$ is constantly produced by nuclear reactions caused by cosmic rays in the atmosphere, and the amount of $^{14}C$ in the atmospheric environment on Earth is constant, balancing with the decrease due to radioactive decay. Therefore, the $^{14}C$ concentration of materials derived from biomass resources circulating in the current environment is approximately $1 \times 10^{-12}$mol% relative to the total C atoms, as mentioned above. Therefore, the biomass ratio in a certain compound can be calculated using the difference between these values.

This $^{14}C$ is generally measured as follows. Accelerator mass spectrometry based on a tandem accelerator is used to measure the $^{13}C$ concentration ($^{13}C/^{12}C$) and the $^{14}C$ concentration ($^{14}C/^{12}C$). In the measurement, the $^{14}C$ concentration in circulating carbon in nature as of 1950 is adopted as the modern standard reference for the $^{14}C$ concentration. As a specific standard substance, an oxalic acid standard provided by NIST (National Institute of Standards and Technology) is used. The specific radioactivity of carbon (radioactivity of $^{14}C$ per gram of carbon) in this oxalic acid is separated for each carbon isotope, and $^{13}C$ is corrected to a constant value, and the value corrected for decay from 1950 to the date of measurement is used as the standard $^{14}C$ concentration value (100%). The ratio of this value to the value of the actually measured sample is the pMC value.

Therefore, if rubber is made from 100% biomass derived materials, it will show a value of about 110 pMC, as it is often not 100 under normal conditions, although there are regional differences. On the other hand, when the $^{14}C$ concentration is measured for chemical substances derived from fossil fuels such as petroleum, it will show a value of about 0 pMC (for example, 0.3 pMC). This value corresponds to the biomass ratio of 0% mentioned above.

For the above reasons, it is preferable from the standpoint of environmental protection (sustainability) to use a material such as rubber having a high pMC value, that is, a material such as rubber having a high biomass ratio (sustainable materials), for the rubber composition.

(b) Compounding materials other than rubber components

(b-1) Filler

The cap rubber composition preferably contains silica or carbon black as a reinforcing agent, but may contain other fillers, such as calcium carbonate, talc, alumina, clay, aluminum hydroxide, mica, vulcanized rubber particles (rubber powder), and the like. When silica is used, it is preferable to use it in combination with a silane coupling agent.

(b-1-1) Silica

Since silica has OH groups on its surface and can capture ozone, it can improve ozone resistance and durability of the tire. By including it more than 75 parts by mass, hydrogen bonds are formed between the silica surfaces and it interacts with the rubber components. Therefore, it is easy to generate and transmit force inside the rubber during driving, and it is easy to transmit the force generated during cornering, thereby improving the ride comfort performance when running at high speeds.

From the viewpoint of obtaining good durability, the BET specific surface area of the silica is preferably more than 100 $m^2/g$, and more preferably more than 130 $m^2/g$. On the other hand, it is preferably less than 250 $m^2/g$, more preferably less than 200 $m^2/g$, and further preferably 175 $m^2/g$ or less. The BET specific surface area is the $N_2SA$ value measured by the BET method according to ASTM D3037-93.

The silica is not particularly limited, and for example, silica commonly used in the tire industry, such as silica prepared by a dry method (anhydrous silica) or silica prepared by a wet method (hydrated silica), can be used. Commercially available products include products from Evonik Industries Co., Ltd., Rhodia Co., Ltd., Tosoh Silica Co., Ltd., Solvay Japan Co., Ltd., Tokuyama Co., Ltd., etc.

The raw material of silica is not particularly limited, and may be, for example, a mineral-derived raw material such as quartz, a biological raw material such as rice husk (for example, silica made from biomass materials such as rice husk), or silica recycled from a product containing silica. Among them, hydrated silica prepared by a wet method is preferred because it has a large amount of silanol groups. These silicas may be used alone or in combination of two or more.

Silica made from biomass materials (biomass silica) can be obtained, for example, by extracting silicate from rice husk ash obtained by burning rice husks using a sodium hydroxide solution, and then reacting the silicate with sulfuric acid in the same manner as conventional wet-process silica to produce a silicon dioxide precipitate, which is then filtered, washed with water, dried, and pulverized.

The silica recycled from a product containing silica (recycled silica) can be, for example, silica recycled from a product containing silica, such as electronic parts such as semiconductors, tires, desiccants, and filtering materials such as diatomaceous earth. The recycle method is not particularly limited, and examples include pyrolysis and decomposition by electromagnetic waves. Among them, silica recycled from electronic parts such as semiconductors or tires is preferred.

When silica crystallizes, it does not dissolve in water and its component silicic acid cannot be used. By controlling

the combustion temperature and combustion time, the crystallization of silica in rice husk ash can be suppressed (see JP 2009-2594 A, Akita Prefectural University Web Journal B/2019, vol. 6, pp. 216-222, etc.).

As an amorphous silica extracted from rice husks, commercially available products from Wilmar Co., etc. can be used.

These silicas may be used alone or in combination of two or more. From the viewpoint of environmental protection, it is preferable to use sustainable silica such as biomass silica obtained from biomass as a raw material or recycled silica obtained by recycling used goods or waste materials.

The content of silica per 100 parts by mass of the rubber component is preferably more than 60 parts by mass, more preferably 70 parts by mass or more, and further preferably 80 parts by mass or more, relative to 100 parts by mass of the rubber component. The upper limit is, for example, preferably 120 parts by mass or less, more preferably 100 parts by mass or less, and further preferably 90 parts by mass or less.

(b-1-2) Silane coupling agent

When silica is used, it is preferable to use a silane coupling agent in combination to increase the dispersibility of the silica and to improve the mechanical properties and moldability by reacting with the silica.

The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as $\gamma$-glycidoxypropyltriethoxysilane and $\gamma$-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. Among these, silane coupling agents having a thiocarbonyl group such as the above-mentioned NXT are preferred. These may be used alone or in combination of two or more kinds.

As the silane coupling agent, for example, products of Evonik Industries Co., Ltd., Momentive Co., Ltd., Shin-Etsu Silicone Co., Ltd., Tokyo Chemical Industry Co., Ltd., Azumax Co., Ltd., Dow Corning Toray Co., Ltd., etc. can be used.

The content of the silane coupling agent is, for example, preferably more than 3 parts by mass, more preferably 5 parts by mass or more, further preferably 7 parts by mass or more, and further preferably 8 parts by mass or more, relative to 100 parts by mass of silica. The upper limit is, for example, preferably less than 15 parts by mass, more preferably 12 parts by mass or less, and further preferably 9 parts by mass or less.

(b-1-3) Carbon black

Carbon black is preferably used for improving the crack growth resistance, durability, resistance to deterioration due to ultraviolet light, and the like of the tire.

From the viewpoint of reinforcing rubber, the nitrogen adsorption specific surface area ($N_2SA$) of carbon black is preferably, for example, 30m$^2$/g or more, more preferably 50m$^2$/g or more, and further preferably 60m$^2$/g or more. On the other hand, from the viewpoint of heat generation, it is preferably 250m$^2$/g or less, more preferably 150 m$^2$/g or less, further preferably 120m$^2$/g or less, and further preferably 115m$^2$/g or less. The nitrogen adsorption specific surface area of carbon black is measured in accordance with ASTM D4820-93.

From the viewpoint of rubber rigidity, the dibutyl phthalate (DBP) absorption of carbon black is preferably, for example, 50 ml/100 g or more, and more preferably 100 ml/100 g or more. On the other hand, from the viewpoint of rubber deformation followability, the DBP absorption of carbon black is preferably 250 ml/100 g or less, and more preferably 150 ml/100 g or less. The DBP absorption of carbon black is measured in accordance with ASTM D2414-93.

The carbon black is not particularly limited, and examples thereof include furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; and channel blacks (channel carbon blacks) such as EPC,

MPC, and CC. Examples of product numbers include N134, N110, N220, N234, N219, N339, N330, N326, N351, N550, and N762. These may be used alone or in combination of two or more.

The raw material for carbon black may be a biomass material such as lignin or vegetable oil, or a recycled material such as pyrolysis oil obtained by pyrolyzing rubber products such as waste tires, in addition to mineral oil. From the viewpoint of environmental protection, it is preferable to use sustainable carbon black such as biomass carbon black made from biomass materials or regenerated carbon black made from recycled materials such as used goods and waste materials.

The carbon black may be produced by combustion, such as in a furnace process, by hydrothermal carbonization (HTC), or by pyrolysis of methane, such as in a thermal black process.

As commercially available products, products of Asahi Carbon Co., Ltd., Cabot Japan Co., Ltd., Tokai Carbon Co., Ltd., Mitsubishi Chemical Co., Ltd., Lion Corporation, Nippon Steel Carbon Co., Ltd., Columbia Carbon Co., Ltd., etc. can be used. These may be used alone or in combination of two or more kinds.

The content of carbon black per 100 parts by mass of the rubber component is preferably 5 parts by mass or more, and more preferably 10 parts by mass or more. The upper limit is, for example, preferably 25 parts by mass or less, and more preferably 20 parts by mass or less.

(b-1-4) Other fillers

In addition to the above-mentioned carbon black and silica, the cap rubber composition may further contain fillers commonly used in the tire industry, such as graphite, calcium carbonate, talc, alumina, clay, aluminum hydroxide, mica, and magnesium sulfate. The content of these is, for example, more than 0.1 parts by mass and less than 150 parts by mass per 100 parts by mass of the rubber component.

(b-2) Softener (plasticizer) component

In order to impart plasticity to the rubber component during kneading and to disperse the powder material appropriately, it is preferable to use a softener (plasticizer) component as necessary in the cap rubber composition. The softener component here is a concept that includes both softeners that are liquid at 25°C and softeners that are solid at 25°C.

Examples of softeners include resin components, oils, liquid polymers, and ester-based plasticizers. These softeners may be derived from mineral resources such as petroleum and natural gas, may be derived from biomass, or may be derived from naphtha recycled from rubber products or non-rubber products. In addition, low molecular weight hydrocarbon components obtained by pyrolysis and extraction of used tires or products containing various components may be used as softeners. Among these, softeners derived from biomass or recycled materials are preferred as sustainable softeners.

These softeners may be used alone or in combination of two or more. The content of the softener component per 100 parts by mass of the rubber component is preferably 30 parts by mass or more, more preferably 40 parts by mass or more, and further preferably 50 parts by mass or more. The upper limit is, for example, preferably 100 parts by mass or less, and more preferably 75 parts by mass or less. The content of the softener component includes the amount of oil contained in the rubber (oil-extended rubber) and the like.

(b-2-1) Oil

Examples of the oil include mineral oil, vegetable oil, and animal oil. From the viewpoint of life cycle assessment, waste oil after use in rubber mixers or engines, or refined waste cooking oil used in restaurants may also be used.

(b-2-1-1) Mineral oil

In this description, mineral oil refers to oil derived from mineral resources such as petroleum, and natural gas. Examples of mineral oil include paraffinic oils (mineral oil), naphthenic oils, and aromatic oils.

Specific examples of mineral oils include Mild Extract Solvated (MES), Distillate Aromatic Extract (DAE), Treated Distillate Aromatic Extract (TDAE), Treated Residual Aromatic Extract (TRAE), and Residual Aromatic Extract (RAE).

In addition, to be environmentally friendly, oils with low polycyclic aromatic compound (PCA) content may be used. Examples of the oils with low PCA include MES, TDAE, and heavy naphthenic oils.

Examples of commercially available mineral oils include paraffinic, aromatic, and naphthenic oils. Examples of such products that can be used include those manufactured by Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Showa Shell Sekiyu Co., Ltd., and Fuji Kosan Co., Ltd. These may be used alone or in combination of two or more kinds.

(b-2-1-2) Vegetable oil

Examples of vegetable oils include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, and coconut oil, palm oil, palm kernel oil, olive oil, camellia oil, jojoba oil, macadamia nut oil, peanut oil, grapeseed oil, and wood wax.

Furthermore, vegetable oils also include refined oils (salad oil, etc.) obtained by refining each of the above oils, transesterified oils obtained by transesterification, hydrogenated oils, thermopolymerized oils obtained by thermal polymerization, oxidized polymerized oils obtained by oxidation, waste cooking oils that have been recovered from edible oils, and the like. Note that the vegetable oil may be liquid or solid at room temperature (25°C). These may be used alone or in combination of two or more.

The vegetable oil preferably contains acylglycerol, and more preferably contains triacylglycerol. Here, acylglycerol refers to a compound in which a hydroxyl group of glycerin and a fatty acid are ester-bonded. The acylglycerol is not particularly limited, and may be 1-monoacylglycerol, 2-monoacylglycerol, 1,2-diacylglycerol, 1,3-diacylglycerol, or triacylglycerol. Furthermore, the acylglycerol may be a monomer, a dimer, or a polymer of trimer or more. Dimer or more acylglycerols can be obtained by thermal polymerization, oxidative polymerization, or the like. The acylglycerol may be liquid or solid at room temperature (25°C).

The method for confirming whether acylglycerol is contained in the rubber composition is not particularly limited, but it can be confirmed by $^1$H-NMR measurement. For example, a rubber composition containing triacylglycerol is immersed in deuterated chloroform at room temperature (25°C) for 24 hours to remove the rubber composition, and then $^1$H-NMR is measured at room temperature, with setting, signals nearby 5.26 ppm, nearby 4.28 ppm, and nearby 4.15 ppm are observed, when the tetramethylsilane (TMS) signal is set to 0.00 ppm. Since the signals are presumed to be signals originate from the hydrogen atom bonded to the carbon atom adjacent to the oxygen atom of the ester group, the content of acylglycerol can be confirmed. Note that "nearby" here refers to a range of $\pm$0.10 ppm.

The fatty acid is not particularly limited, and may be an unsaturated fatty acid or a saturated fatty acid. Examples of the unsaturated fatty acid include monounsaturated fatty acids such as oleic acid, and polyunsaturated fatty acids such as linoleic acid and linolenic acid. Examples of the saturated fatty acid include butyric acid and lauric acid.

Among them, a fatty acid with few double bonds, i.e., a saturated fatty acid or a monounsaturated fatty acid is preferable, and oleic acid is preferable. As the vegetable oil containing such a fatty acid, for example, a vegetable oil containing a saturated fatty acid or a monounsaturated fatty acid may be used, or a vegetable oil modified by transesterification or the like may be used. In addition, to produce a vegetable oil containing such a fatty acid, a plant may be improved by breeding, genetic recombination, genome editing, or the like.

Examples of vegetable oils include products commercially available from Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Fuji Kosan Co., Ltd., and Nisshin Oillio Group Co., Ltd.

(b-2-2) Liquid rubber

Liquid rubber is a polymer that is in a liquid state at room temperature (25°C), and is a rubber component that can be extracted from a vulcanized tire by acetone extraction. Examples of the liquid rubber include farnesene-based polymers, liquid diene polymers, and hydrogenated products thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrenebutadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. Here, Mw of the liquid diene polymer is a polystyrene conversion value measured by gel permeation chromatography (GPC).

As the liquid rubber, for example, products manufactured by Kuraray Co., Ltd., Clay Valley Co., Ltd., etc. can be used.

(b-2-3) Resin component

The tread rubber composition preferably contains a resin component. By containing a resin component in the cap rubber composition, the contact to the road surface is improved due to the adhesion of the resin component, so that it is believed that the ride comfort performance during high-speed running can be further improved.

The resin component also functions as a tackifying component, and may be solid or liquid at room temperature. Specific examples of the resin components include rosin-based resin, styrene resin, coumaron-based resin, terpene resin, C5 resin, C9 resin, C5C9 resin, and acrylic resin, and two or more types may be used in combination. These resin components may be provided with a modified group capable of reacting with silica, etc., as necessary. The content of the resin component relative to 100 parts by mass of the rubber component is preferably 10 parts by mass or more, and more preferably 20 parts by mass or more. The upper limit is, for example, preferably 60 parts by mass or less, more preferably 55 parts by mass or less, and further preferably 50 parts by mass or less.

Rosin-based resin is a resin whose main component is rosin acid obtained by processing pine resin. This rosin-based resin (rosins) can be classified according to the presence or absence of modification, and can be classified into unmodified rosin (unmodified rosin) and modified rosin (rosin derivative). Examples of unmodified rosin include tall rosin (also known as tall oil rosin), gum rosin, wood rosin, disproportionated rosin, polymerized rosin, hydrogenated rosin, and other chemically modified rosins. The modified rosin is a modified version of unmodified rosin, and examples thereof include rosin esters, unsaturated carboxylic acid-modified rosins, unsaturated carboxylic acid-modified rosin esters, amide compounds of rosin, and amine salts of rosin.

The styrene-based resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more of the styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; α, β-unsaturated carboxylic acids such as maleic anhydride, and acid anhydrides thereof.

Among coumaron-based resins, coumaron indene resin is preferred. Coumaron indene resin is a resin containing coumaron and indene as monomer components that constitute the skeleton (main chain) of the resin. In addition to coumaron and indene, a monomer component such as styrene, α-methylstyrene, methylindene, and vinyltoluene may be contained in the skeleton.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as a hydrogenated terpene resin obtained by hydrogenating the terpene resin. Examples of the terpene phenol include a resin obtained by copolymerizing the above-mentioned terpene compound and the phenolic compound, and a resin obtained by hydrogenating above-mentioned resin. Specifically, a resin obtained by condensing the above-mentioned terpene compound, the phenol compound and the formalin can be mentioned. Examples of the phenolic compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumaron, and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene (AMS resin) or styrene or a copolymer of α-methylstyrene and styrene is preferable because it is economical, easy to process, and excellent in heat generation properties. A copolymer of α-methylstyrene and styrene is more preferred. As the aromatic vinyl-based resin, for example, those commercially available from Kraton Co., Eastman Chemical Co., etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA Corporation, etc. can be used.

Although the acrylic resin is not particularly limited, for example, a solvent-free acrylic resin can be used.

As the solvent-free acrylic resin, a (meth) acrylic resin (polymer) synthesized by a high-temperature continuous polymerization method (high-temperature continuous lump polymerization method: a method described in US 4,414,370 B, JP 84-6207 A, JP 93-58805 A, JP 89-313522 A, US 5,010,166 B, Toa Synthetic Research Annual Report TREND2000 No. 3, p42-45, etc.) without using polymerization initiators, chain transfer agents, organic solvents, etc. as auxiliary raw materials as much as possible, can be mentioned. In the present invention, (meth) acrylic means methacrylic and acrylic.

Examples of monomer components constituting the acrylic resin include (meth)acrylic acid, (meth)acrylic acid esters (alkyl esters, aryl esters, aralkyl esters, etc.), and (meth)acrylic acid derivatives such as (meth)acrylamide, and (meth)acrylamide derivatives.

As the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth)acrylic acid or (meth)acrylic acid derivative.

The acrylic resin may be a resin composed of only a (meth) acrylic component or a resin also having a component other than the (meth) acrylic component. The acrylic resin may have a hydroxyl group, a carboxyl group, a silanol group, or the like.

Examples of the resin component which can be used include products of Maruzen Petrochemical Co., Ltd., Sumitomo Bakelite Co., Ltd., Yasuhara Chemical Co., Ltd., Tosoh Corporation, Rutgers Chemicals Co., Ltd., BASF Co., Ltd., Kraton Co., Ltd., Nitto Chemical Co., Ltd., Nippon Shokubai Co., Ltd., ENEOS Co., Ltd., Arakawa Chemical Industry Co., Ltd., and Taoka Chemical Industry Co., Ltd.

(b-3) Wax

The cap rubber composition may contain a wax. The content of the wax is, for example, preferably 0.5 parts by mass or more, more preferably 1.0 parts by mass or more, and further preferably 1.5 parts by mass or more, relative to 100 parts by mass of the rubber component. The upper limit is, for example, preferably 20 parts by mass or less, more preferably 15 parts by mass or less, and further preferably 10 parts by mass or less.

The wax is not particularly limited, and any wax commonly used in the tire industry can be suitably used. Examples of the wax include mineral waxes and vegetable-derived waxes. Mineral waxes refer to waxes derived from mineral resources such as oil and natural gas. Vegetable waxes refer to waxes derived from natural resources such as plants. Among them, mineral waxes are preferred.

Examples of the wax derived from plants include rice wax, carnauba wax, and candelilla wax. Examples of the mineral wax include paraffin wax, microcrystalline wax, and selected special waxes thereof, and paraffin wax is preferred. In the present invention, the wax does not contain stearic acid.

As the wax, for example, commercially available waxes from Ouchi Shinko Chemical Industry Co., Ltd., Nippon Seiro Co., Ltd., Paramelt Co., Ltd., etc. may be used. These waxes may be used alone or in combination of two or more kinds.

(b-4) Anti-aging agents

The cap rubber composition may contain an anti-aging agent. The content of the anti-aging agent is, for example, preferably more than 1 part by mass, and more preferably 3 parts by mass or more, relative to 100 parts by mass of the rubber component. The upper limit is preferably less than 10 parts by mass.

The antiaging agent is not particularly limited, and examples thereof include naphthylamine-based antiaging agents such as phenyl-α-naphthylamine; diphenylamine-based antiaging agents such as octylated diphenylamine and 4,4'-bis(α,α'-dimethylbenzyl)diphenylamine; p-phenylenediamine-based anti-aging agents such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based anti-aging agents such as 2,2,4-trimethyl-1,2-dihydroquinoline polymers; monophenol-based anti-aging agents such as 2,6-di-t-butyl-4-methylphenol and styrenated phenol; and bis-, tris-, and polyphenol-based anti-aging agents such as tetrakis-[methylene-3-(3',5'-di-t-butyl-4'-hydroxyphenyl)propionate]methane. Among these, p-phenylenediamine-based anti-aging agents and quinoline-based anti-aging agents are preferred, and N-(1,3-dimethylbutyl)-N'-phenyl-p-phenylenediamine and 2,2,4-trimethyl-1,2-dihydroquinoline polymers are more preferred. These may be used alone or in combination of two or more kinds.

As commercially available products, for example, products from Seiko Chemical Co., Ltd., Sumitomo Chemical Co., Ltd., Ouchi Shinko Chemical Co., Ltd., Flexsys Co., Ltd., etc. can be used.

(b-5) Processing aids

The cap rubber composition may contain a processing aid. Examples of the processing aid include metal salts (compounds in which hydrogen atoms of an acid are replaced with metal ions), fatty acid amides, amide esters, and fatty acid esters. These may be used alone or in combination of two or more. Among these, metal salts and fatty acid amides are preferred, and metal salts are more preferred.

Examples of metals used in the metal salt include alkali metals such as potassium and sodium, and alkaline earth metals such as calcium and barium. Magnesium, zinc, nickel, molybdenum, etc. can also be used. Among these, alkali metals are preferred.

Examples of acids used in the metal salt include fatty acids such as lauric acid, myristic acid, and palmitic acid. In addition, boric acid, carbonic acid, hydrochloric acid, nitric acid, sulfuric acid, and the like can also be used.

Examples of commercially available processing aids that can be used include products from Kishida Chemical Co., Ltd., Kenei Pharmaceutical Co., Ltd., Struktol Co., Ltd., and Performance Additives Co., Ltd.

The content of the processing aid is preferably 1 part by mass or more, and more preferably 2 parts by mass or more, relative to 100 parts by mass of the rubber component. The upper limit is, for example, preferably 6 parts by mass or less, and more preferably 4 parts by mass or less.

(b-6) Lubricant (stearic acid)

The cap rubber composition may contain a lubricant. As the lubricant, a lubricant based on a fatty acid derivative such as stearic acid can be preferably used. As the stearic acid, a conventionally known one can be used. Specifically, for example, products of NOF Corporation, Kao Corporation, Fujifilm Wako Pure Chemical Co. Ltd., Chiba Fatty Acid Co. Ltd., etc. can be used. In addition, Struktol WB16 manufactured by Struktol Co., Ltd., and the like can also be used.

The content of stearic acid is, for example, preferably more than 0.5 parts by mass, and more preferably 2.0 parts by mass or more relative to 100 parts by mass of the rubber component. The upper limit is preferably less than 10.0 parts by mass.

(b-7) Zinc oxide

The cap rubber composition may contain zinc oxide. The content of zinc oxide is, for example, preferably more than 0.5 parts by mass, and more preferably 3.0 parts by mass or more, relative to 100 parts by mass of the rubber component. The upper limit is preferably less than 10 parts by mass. As the zinc oxide, a conventionally known product can be used, and for example, products of Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. can be used.

(b-8) Crosslinking agents and vulcanization accelerators

The cap rubber composition preferably contains a crosslinking agent such as sulfur. The content of the crosslinking agent is, for example, preferably more than 0.1 parts by mass, and more preferably 2 parts by mass or more, relative to 100 parts by mass of the rubber component. The upper limit is preferably less than 10.0 parts by mass. The sulfur content is the pure sulfur content, and in the case of using insoluble sulfur, it is the content excluding the oil content.

Examples of sulfur include powdered sulfur, precipitated sulfur, colloidal sulfur, insoluble sulfur, highly dispersible sulfur, soluble sulfur, and the like which are generally used in the rubber industry. These may be used alone or in combination of two or more kinds.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Cross-linking agents other than sulfur may be used. Specific examples of the cross-linking agent other than sulfur

include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys Co., Ltd., and KA9188 (1,6-bis (N, N'-dibenzylthiocarbamoyldithio)hexane; hybrid crosslinking agent) manufactured by Lanxess Co., Ltd., and organic peroxides such as dicumylperoxide.

The cap rubber composition preferably contains a vulcanization accelerator. The content of the vulcanization accelerator is, for example, preferably more than 0.3 parts by mass, and more preferably 4 parts by mass or more relative to 100 parts by mass of the rubber component. The upper limit is, preferably less than 10.0 parts by mass.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-9) Other

In addition to the above-mentioned components, the cap rubber composition may contain additives commonly used in the tire industry, such as organic fillers such as cellulose fibers, and organic peroxides, as necessary. The content of these additives is, for example, more than 0.1 parts by mass and less than 50 parts by mass relative to 100 parts by mass of the rubber component.

In the present invention, among the above-mentioned materials, various materials containing carbon atoms (e.g., rubber, oil, resin, vulcanization accelerator, anti-aging agent, surfactant, etc.) may be derived from carbon dioxide in the atmosphere. As a method for obtaining the compound of the present invention from carbon dioxide, carbon dioxide may be directly converted, or methane obtained through a methanation process for synthesizing methane from carbon dioxide may be converted.

(2) Preparation of Cap Rubber Composition

The cap rubber composition can be prepared by a general method, for example, a manufacturing method including a base kneading step of kneading a rubber component with a filler such as silica, and a finish kneading step of kneading the kneaded product obtained in the base kneading step with a crosslinking agent.

The kneading can be carried out using a known (sealed type) kneading machine such as a Banbury mixer, a kneader, or an open roll.

The kneading temperature in the base kneading step is, for example, higher than 50°C and lower than 200°C, and the kneading time is, for example, longer than 30 seconds and shorter than 30 minutes. In the base kneading step, in addition to the above-mentioned components, compounding agents conventionally used in the rubber industry, for example, softeners such as oil, stearic acid, zinc oxide, anti-aging agents, waxes, and vulcanization accelerators, may be appropriately added and kneaded as necessary.

In the finish kneading step, the kneaded product obtained in the base kneading step is kneaded with a crosslinking agent. The kneading temperature in the finish kneading step is, for example, higher than room temperature and lower than 80°C, and the kneading time is, for example, longer than 1 minute and shorter than 15 minutes. In the finish kneading step, in addition to the above components, a vulcanization accelerator, zinc oxide, etc. may be appropriately added and kneaded as necessary.

The cap rubber composition obtained as described above can then be extruded into a predetermined shape to form a tread.

3. Tire manufacturing

The tire according to the present embodiment can be manufactured by a normal method. First, the cap rubber composition obtained above is molded into a predetermined shape to manufacture a tread. Next, it is combined with other rubber members on a tire molding machine to manufacture an unvulcanized tire.

In addition, when the tread portion has a multi-layer structure with a base rubber layer, the rubber composition for forming the base rubber layer (base rubber composition) can be obtained basically by using the above-mentioned rubber

components and compounding materials, appropriately changing the compounding amounts, and kneading in the same manner. The base rubber composition can then be extruded together with the cap rubber layer to form a tread rubber of a predetermined shape, and then molded together with other tire members in a normal manner on a tire molding machine to manufacture an unvulcanized tire.

Specifically, an inner liner as a member to ensure the air-tightness of the tire, a carcass as a member for enduring the load, impact and filling air pressure received by the tire, and a belt member or band as a member to strongly tighten the carcass to increase the rigidity of the tread are wound around a molding drum, and bead portions as members for fixing both ends of the carcass to both side edges and fixing the tire to the rim are arranged. After molding into a toroidal shape, a tread is pasted to the center of the outer periphery to form the tread portion, and a sidewall is pasted to the radially outside to form the side portion, thereby manufacturing an unvulcanized tire.

The unvulcanized tire thus produced is then heated and pressurized in a vulcanizer to obtain a tire. The vulcanization step can be carried out by applying a known vulcanization method. The vulcanization temperature is, for example, higher than 120°C and lower than 200°C, and the vulcanization time is, for example, longer than 5 minutes and shorter than 15 minutes.

As described above, the resulting tire uses sustainable polyester cord for the ply cord, and the complex elastic modulus of the cap rubber layer and the thickness at the center of the tread portion are appropriately controlled, thereby reducing the environmental impact and saving resources, and further improving the ride comfort performance when the tire is running at high speeds.

The tire according to the present invention is not particularly limited in category and can be used as a passenger car tire, a large passenger car tire, a large SUV tire, a truck/bus tire, a motorcycle tire, a racing tire, a studless tire (winter tire), an all-season tire, a run-flat tire, an aircraft tire, a mining tire, a non-pneumatic tire, etc., but is preferably a passenger car tire. Also, it is preferably a pneumatic tire.

EXAMPLES

Examples (embodiments) considered to be preferable for carrying out the present invention will be described below, but the scope of the present invention is not limited to these examples.

The results of an investigation into the ride comfort performance of tires (tire size: 225/55R16, land ratio: 85% ) made of the various carcasses, treads, and other rubber members shown below are shown in the lower part of Tables 1 and 2.

1. Preparation of cap rubber composition

A cap rubber composition is prepared using various compounding materials shown below.

(1) Compounding materials

(a) Rubber component

(a-1) SBR -1: Modified S - SBR obtained by the method shown in the next paragraph. (styrene content: 25% by mass, vinyl content: 25 % by mass)
(a-2) SBR -2: HPR850 (modified S - SBR) manufactured by ENEOS Materials Corporation (styrene content: 27.5 % by mass, vinyl content: 59.0 % by mass)
(a-3) BR: Ubepol BR150B (Hicis BR) manufactured by Ube Industries (cis content: 97% by mass, trans content: 2% by mass, vinyl content: 1% by mass)

(Production of SBR -1)

The above SBR-1 is produced according to the following procedure. First, two autoclaves having an internal volume of 10 L, having an inlet at the bottom and an outlet at the top, equipped with a stirrer and a jacket, were connected in series as reactors. Butadiene, styrene, and cyclohexane were each mixed in a predetermined ratio. This mixed solution is passed through a dehydration column filled with activated alumina, mixed with n-butyllithium in a static mixer to remove impurities. Then, it is continuously supplied from the bottom of the first reactor, further 2,2-bis(2-oxolanyl)propane as a polar substance and n-butyllithium as a polymerization initiator are continuously supplied at a predetermined rate from the bottom of the first reactor, and the internal temperature of the reactor is kept at 95°C. The polymer solution is continuously withdrawn from the top of the first reactor and supplied to the second reactor. The temperature of the second reactor is kept

at 95°C, and a mixture of tetraglycidyl-1,3-bisaminomethylcyclohexane (monomer) as a modifier and an oligomer component is continuously added, as a 1000-fold dilution of cyclohexane, at a predetermined rate to carry out the denaturation reaction. This polymer solution is continuously withdrawn from the reactor, an antioxidant is added continuously by a static mixer, and the solvent is removed to obtain the desired modified diene polymer (SBR-1).

(b) Compounding materials other than rubber components

(b-1) Carbon black: Diablack N220 manufactured by Mitsubishi Chemical Corporation ($N_2SA$ : 115$m^2$/g)
(b-2) Silica: Ultrasil VN3 manufactured by Evonik Industries
($N_2SA$: 175 $m^2$/g, average primary particle diameter: 17 nm)
(b-3) Silane coupling agent: Si266 manufactured by Evonik Industries
(Bis(3-triethoxysilylpropyl)disulfide)
(b-4) Resin: SYLVATRAXX4401 manufactured by Kraton Co. Ltd.
(a-methylstyrene resin)
(b-5) Oil: Diana Process NH-70S manufactured by Idemitsu Kosan Co., Ltd.
(Aromatic process oil)
(b-6) Stearic acid: bead stearic acid " Tsubaki " manufactured by NOF Corp.
(b-7) Zinc oxide : Two types of zinc oxide manufactured by Mitsui Mining & Smelting Co., Ltd.
(b-8) Anti-aging agent-1: Antigen 6C manufactured by Sumitomo Chemical Co., Ltd. (N- (1,3-dimethylbutyl)-N' -phenyl-p-phenylenediamine)
(b-9) Anti-aging agent-2: Antigen RD manufactured by Sumitomo Chemical Co., Ltd. (Polymer of 2,2,4 - trimethyl - 1,2 - dihydroquinoline)
(b-10) Wax: Ozoace 0355 manufactured by Nippon Seiro Co., Ltd.
(b-11) Sulfur: Powdered sulfur (containing 5% oil) manufactured by Tsurumi Chemical Industry Co., Ltd.
(b-12) Vulcanization accelerator -1: Nocceler CZ manufactured by Ouchi Shinko Chemical Industry Co., Ltd.
(N-cyclohexyl-2-benzothiazylsulfenamide (CBS))
(b-13) Vulcanization accelerator - 2: Soxinol D (DPG) manufactured by Sumitomo Chemical Co., Ltd. (N,N'-diphenylguanidine)

(2) Production of tread rubber composition (cap rubber composition)

According to the respective blending contents shown in Tables 1 and 2, materials other than sulfur and vulcanization accelerator are mixed for 5 minutes at 150°C using a Banbury mixer to obtain a kneaded mixture. The blending amounts are in parts by mass.

Next, sulfur and a vulcanization accelerator are added to the kneaded mixture, and the mixture is kneaded for 5 minutes at 80°C using an open roll to obtain each cap rubber composition.

2. Manufacturing of the tread portion

Using each of the cap rubber compositions obtained above and a base rubber composition prepared separately, a tread portion is manufactured by extrusion processing into a predetermined shape so that the thickness A (mm) of the center portion of the tread portion is the value shown in Tables 1 and 2 (thickness of cap rubber layer / thickness of entire tread portion: 80%).

3. Manufacturing of carcass ply

Separately, carcass plies are manufactured with the same specifications, except that each ply cord with the specifications shown in Tables 1 and 2 is used. In Tables 1 and 2, PET (bio) refers to cords made of biopolyester produced using bio-derived raw materials, and PET (recycled) refers to cords made of recycled polyester recycled from plastic waste such as PET bottles and old clothes.

Among the specifications of each ply cord shown in Tables 1 and 2 , the total fineness, strength S, intermediate elongation E, and breaking elongation are values measured in accordance with the method specified in the above-mentioned JIS L1017:2002 "Testing method for chemical fiber tire cords". The cord diameter F is a value measured as the equivalent diameter of a circumscribed circle of a cross section perpendicular to the extension direction, and the ends D is a value measured as the number of cords present in a width of 5 cm perpendicular to the longitudinal direction. The isophthalic acid content IF is a value measured by high performance liquid chromatography (HPLC), and the moist heat

resistance strength retention rate is a value obtained by calculating the ratio of the strength after 48 hours of treatment with saturated steam at 135°C (moist heat treatment) to the strength before treatment.

4. Manufacturing of pneumatic tires

Thereafter, they are pasted together with other tire members to form an unvulcanized tire, which is then press-vulcanized for 10 minutes under a condition of 170°C to manufacture each of test tires of Examples 1 to 6 and Comparative Examples 1 to 3.
Next, a rubber test piece for viscoelasticity measurement is prepared by cutting out a size of 20 mm in length, 4 mm in width, and 1 mm in thickness from the cap rubber layer of the tread portion of each test tire, with the long side in the tire circumferential direction. For each rubber test piece, the complex elastic modulus E* (MPa) is measured using an "EPLEXOR (registered trademark)" series manufactured by GABO Corporation under conditions of a temperature of 30 °C, a frequency of 10 Hz, an initial strain of 5%, and a dynamic strain of 1%, in a deformation mode: tensile.
The thickness direction of the sample is the radial direction of the tire. When the same compounding is used in a plurality of examples, the average value of the values measured for each test tire is used.

5. Parameters

Then, (E* /A), (E* /A × F), (E* /A × D), and ((E* /A) × F/(100-IF)) are calculated.

6. Performance evaluation (evaluation of ride comfort during high-speed running)

Each test tire is mounted on all wheels of a vehicle (domestic front-wheel drive vehicle, 2000cc displacement), and the internal pressure is filled with air to 250 kPa (standard internal pressure for passenger cars). After a break-in run on a test course with a dry asphalt surface at a road temperature of 25°C, the vehicle is driven at approximately 120 km/h and a comprehensive sensory evaluation is made of items related to ride comfort performance (such as vibration and impact transmitted from the road surface to the seat). The evaluation is made by 10 drivers on a 5-point scale (the higher the number, the better), and the total score of each driver 's evaluation is calculated.
Next, the result of Comparative Example 1 is set to 100 and indexed according to the following formula to evaluate the ride comfort performance during high-speed running. A larger value indicates better ride comfort performance during high-speed running.

$$\text{Ride comfort performance when running at high speeds}$$
$$= [(\text{Test tire results}) / (\text{Comparative example 1 results})] \times 100$$

[Table 1]

| | Example | | | | | |
|---|---|---|---|---|---|---|
| | 1 | 2 | 3 | 4 | 5 | 6 |
| Cap rubber layer composition (parts by weight) | | | | | | |
| SBR-1 | - | - | - | 60 | - | - |
| SBR-2 | 40 | 40 | 40 | - | 40 | 40 |
| B.R. | 60 | 60 | 60 | 40 | 60 | 60 |
| Carbon Black | 5 | 5 | 5 | 20 | 5 | 5 |
| Silica | 80 | 80 | 80 | 90 | 80 | 80 |
| Silane Coupling Agent | 6.4 | 6.4 | 6.4 | 7.2 | 6.4 | 6.4 |
| Resin | - | - | - | 55 | - | - |
| Oil | 50 | 50 | 50 | 45 | 50 | 50 |
| Stearic acid | 2 | 2 | 2 | 2 | 2 | 2 |
| Zinc oxide | 3 | 3 | 3 | 3 | 3 | 3 |

(continued)

| | Example | | | | | |
|---|---|---|---|---|---|---|
| | 1 | 2 | 3 | 4 | 5 | 6 |
| Cap rubber layer composition (parts by weight) | | | | | | |
| Anti-aging agent-1 | 2 | 2 | 2 | 2 | 2 | 2 |
| Anti-aging agent-2 | 1 | 1 | 1 | 1 | 1 | 1 |
| Wax | 1 | 1 | 1 | 1 | 1 | 1 |
| Sulfur | 2 | 2 | 2 | 2 | 2 | 2 |
| Vulcanization accelerator-1 | 2 | 2 | 2 | 2 | 2 | 2 |
| Vulcanization accelerator-2 | 2 | 2 | 2 | 2 | 2 | 2 |
| Complex elastic modulus E* (Mpa) | 7 | 7 | 7 | 5 | 7 | 7 |
| Ply Code | | | | | | |
| Material (origin) | PET-1 (Bio) | PET-2 (Bio) | PET-3 (Bio) | PET-1 (Bio) | PET-1 (Bio) | PET-4 (Recycle) |
| Composition | 1670 dtex/2 | 3300 dtex/2 | 1100 dtex/2 | 1670 dtex/2 | 1670 dtex/2 | 1670 dtex/2 |
| Total fineness (dtex) | 3340 | 6600 | 2200 | 3340 | 3340 | 3340 |
| Isophthalic acid content IF (%) | 0 | 0 | 0 | 0 | 0 | 2 |
| Cord diameter F (mm) | 0.68 | 0.98 | 0.55 | 0.68 | 0.68 | 0.68 |
| Strength S (cN/dtex) | 6.7 | 6.7 | 6.7 | 6.7 | 6.7 | 6.0 |
| Ends D (cords/5cm) | 32 | 30 | 40 | 32 | 32 | 32 |
| S × D | 214.4 | 201 | 268 | 214.4 | 214.4 | 192 |
| Specified load L (cN/dtex) | 2.0 | 2.0 | 3.0 | 2.0 | 2.0 | 2.0 |
| Intermediate elongation E (%) | 4.3 | 4.3 | 4.3 | 4.3 | 4.3 | 4.7 |
| L × D/E | 14.9 | 14.0 | 28.3 | 14.9 | 14.9 | 13.7 |
| Breaking elongation (%) | 13 | 13 | 13 | 13 | 13 | 13 |
| Moist heat resistance strength retention rate (%) | 90 | 90 | 90 | 90 | 90 | 82 |
| Tread | | | | | | |
| Thickness A (mm) | 11 | 11 | 11 | 11 | 13 | 11 |
| Parameters | | | | | | |
| E*/A | 0.64 | 0.64 | 0.64 | 0.45 | 0.54 | 0.64 |
| E* /A×F | 0.43 | 0.62 | 0.35 | 0.31 | 0.37 | 0.43 |
| E*/A×D | 20.4 | 19.1 | 25.5 | 14.5 | 17.2 | 20.4 |
| (E*/A) × F/(100-IF) | 0.0043 | 0.0062 | 0.0035 | 0.0031 | 0.0037 | 0.0044 |
| Performance evaluation | | | | | | |
| Ride comfort performance at high speeds | 116 | 110 | 119 | 135 | 123 | 123 |

[Table 2]

| | Comparative Example | | |
|---|---|---|---|
| | 1 | 2 | 3 |
| Cap rubber layer composition (parts by weight) | | | |
| SBR-1 | - | - | - |
| SBR-2 | 40 | 40 | 40 |
| B.R. | 60 | 60 | 60 |
| Carbon Black | 5 | 5 | 5 |
| Silica | 80 | 120 | 120 |
| Silane Coupling Agent | 6.4 | 9.6 | 9.6 |
| Resin | - | - | - |
| Oil | 50 | 80 | 80 |
| Stearic acid | 2 | 2 | 2 |
| Zinc oxide | 3 | 3 | 3 |
| Anti-aging agent-1 | 2 | 2 | 2 |
| Anti-aging agent-2 | 1 | 1 | 1 |
| Wax | 1 | 1 | 1 |
| Sulfur | 2 | 2 | 2 |
| Vulcanization accelerator-1 | 2 | 2 | 2 |
| Vulcanization accelerator-2 | 2 | 2 | 2 |
| Complex elastic modulus E * (Mpa) | 7 | 9 | 9 |
| Ply Code | | | |
| Material (origin) | PET-5 (Bio) | PET-1 (Bio) | PET-4 (Recycle) |
| Composition | 1100 dtex/2 | 1670 dtex/2 | 1670 dtex/2 |
| Total fineness (dtex) | 2200 | 3340 | 3340 |
| Isophthalic acid content IF (%) | 0 | 0 | 2 |
| Cord diameter F (mm) | 0.55 | 0.68 | 0.68 |
| Strength S (cN/dtex) | 6.7 | 6.7 | 6.0 |
| Ends D (cord/5cm) | 32 | 32 | 32 |
| S × D | 214.4 | 214.4 | 192 |
| Specified load L (cN/dtex) | 2.0 | 2.0 | 2.0 |
| Intermediate elongation E (%) | 4.3 | 4.3 | 4.7 |
| L × D/E | 14.9 | 14.9 | 13.7 |
| Breaking elongation (%) | 13 | 13 | 13 |
| Moist heat resistance strength retention rate (%) | 90 | 90 | 82 |
| Tread | | | |
| Thickness A (mm) | 8 | 8 | 8 |
| Parameters | | | |
| E*/ A | 0.88 | 1.13 | 1.13 |
| E*/A×F | 0.48 | 0.77 | 0.77 |
| E*/A × D | 28.0 | 36.0 | 36.0 |

(continued)

| Parameters | | | |
|---|---|---|---|
| (E*/A)×F/(100-IF) | 0.0048 | 0.0077 | 0.0078 |
| Performance evaluation | | | |
| Ride comfort performance at high speeds | 100 | 94 | 97 |

Although the present invention has been described above based on the embodiment, the present invention is not limited to the above embodiment. Various modifications can be made to the above embodiment within the same and equivalent scope of the present invention.

[EXPLANATION OF SYMBOLS]

| | |
|---|---|
| 1. | Tire |
| 2. | Tread portion |
| 3. | Sidewall portion |
| 4. | Bead portion |
| 5. | Bead core |
| 6. | Carcass |
| 6A. | Carcass ply |
| 6a. | Inner body part |
| 6b. | Outer folded part |
| 7. | Belt layer |
| 8. | Bead apex rubber |
| C. | Center line |

## Claims

**1.** A tire comprising a tread portion having a cap rubber layer and a carcass portion, wherein,

a sustainable polyester cord is used as a ply cord in the carcass ply constituting the carcass portion,
E* (MPa) of the cap rubber layer measured under conditions of a temperature of 30°C, an initial strain of 5%, a dynamic strain of 1%, a frequency of 10 Hz, and a deformation mode; tensile, and the thickness A (mm) of the center portion of the tread portion satisfy the following formula.

$$E^* / A \leqq 0.75$$

**2.** The tire according to claim 1, wherein
the (E* /A) is 0.65 or less, preferably 0.64 or less, preferably 0.54 or less and preferably 0.46 or less.

**3.** The tire according to claim 1 or 2, wherein
the product ((E* /A) × F) of a diameter F (mm) of the sustainable polyester cord and the (E* / A) satisfies the following formula.

$$(E^* / A) \times F < 0.59$$

**4.** The tire according to claim 3, wherein
((E*/A) × F) is less than 0.45, preferably 0.44 or less, preferably 0.37 or less, preferably 0.36 or less, and preferably 0.31 or less.

5. The tire according to any one of claims 1 to 4, wherein the sustainable polyester cord is a sustainable polyethylene terephthalate cord.

6. The tire according to any one of claims 1 to 5, wherein the content of isophthalic acid in the sustainable polyester cord is less than 0.1 mol%.

7. The tire according to any one of claims 1 to 6, wherein the relationship formula, ((E* /A) × F)/(100-IF), between the (E* /A), the diameter F (mm) of the sustainable polyester cord, and the content IF (%) of isophthalic acid in the sustainable polyester cord is less than 0.0063, preferably less than 0.0045, preferably less than 0.0044, preferably less than 0.0037, preferably less than 0.0036, and preferably less than 0.0031.

8. The tire according to any one of claims 1 to 7, wherein the sustainable polyester cord has a strength S (cN/dtex) of 6.0 cN/dtex or more.

9. The tire according to any one of claims 1 to 8, wherein the product (S × D) of a strength S (cN/dtex) of the sustainable polyester cord and a number D (cords/5 cm) of the sustainable polyester cord present in a width of 5 cm in a direction perpendicular to the longitudinal direction of the sustainable polyester cord in the tread portion is 160 or more, preferably 192 or more, preferably 201 or more, preferably 214 or more, and preferably 268 or more.

$$S \times D \geqq 160$$

10. The tire according to any one of claims 1 to 9, wherein a relationship formula (L × D/E) between the intermediate elongation E (%) of the sustainable polyester cord at a specified load L (cN/dtex) and a number D (cords/5 cm) of the sustainable polyester cord present in a width of 5 cm in a direction perpendicular to a longitudinal direction of the sustainable polyester cord in the tread portion is 12 or more, preferably 13.6 or more, preferably 13.9 or more, preferably 14.0 or more, and preferably 14.9 or more, while is 20 or less, preferably 15.0 or less, preferably 14.0 or less, and preferably 13.7 or less.

11. The tire according to any one of claims 1 to 10, wherein the sustainable polyester cord has a breaking elongation of 10% or more.

12. The tire according to any one of claims 1 to 11, wherein the sustainable polyester cord has a moist heat resistance strength retention rate of 80% or more.

13. The tire according to any one of claims 1 to 12, wherein the product ((E* /A) × D) of the number D (cords/5 cm) of the sustainable polyester cords present in a width of 5 cm in a direction perpendicular to the longitudinal direction of the sustainable polyester cord in the tread portion and (E* /A) is less than 25.5, less than 20.4, less than 19.1, less than 17.3, and less than 14.6.

FIG. 1

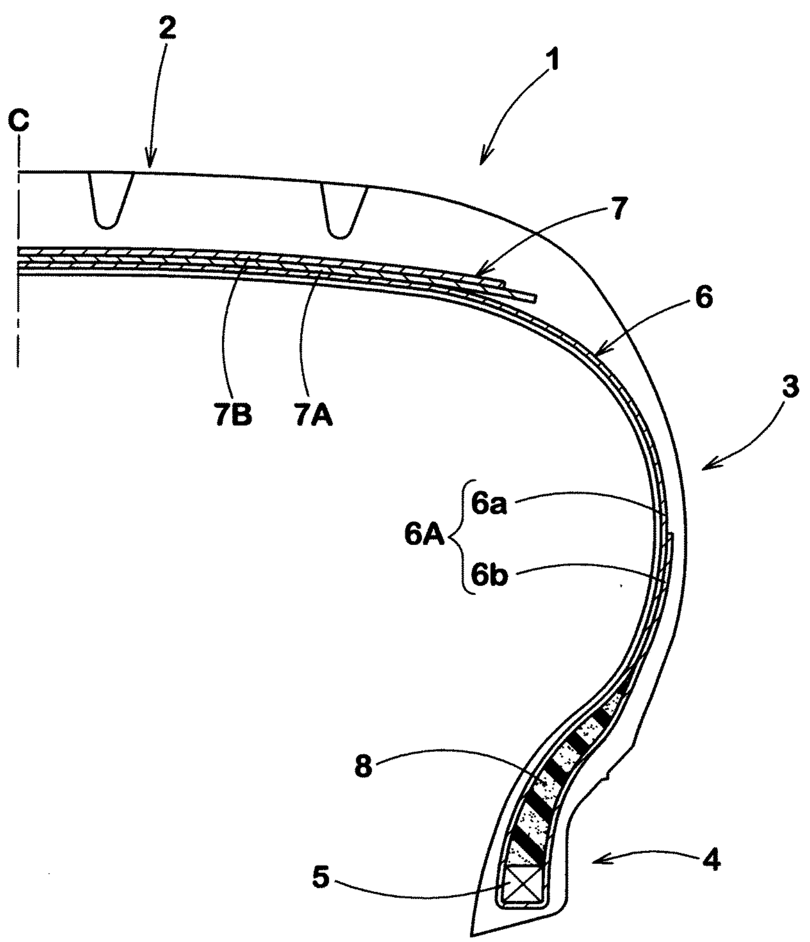

Europäisches Patentamt
European Patent Office
Office européen des brevets

# EUROPEAN SEARCH REPORT

Application Number
EP 25 19 1769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2024 070442 A (SUMITOMO RUBBER IND) 23 May 2024 (2024-05-23) * paragraphs [0022] - [0026], [0213], [0232] - [0236], [0242], [0290], [0291], [0298]; claims 4, 5; figures 5, 6 * | 1-13 | INV. B60C9/00 B60C11/00 |
| A | FR 3 058 147 A1 (MICHELIN & CIE [FR]; MICHELIN RECH TECH [CH]) 4 May 2018 (2018-05-04) * page 13, lines 13-20; claim 31; figures 1, 2 * * page 13, line 22 - page 15, line 19 * | 1-13 | |
| A,P | DE 10 2024 104538 A1 (SUMITOMO RUBBER IND [JP]) 29 August 2024 (2024-08-29) * paragraphs [0196], [0202], [0221]; claims 1, 2; figures 1, 3; tables 2, 4 * | 1-13 | |
| | | | TECHNICAL FIELDS SEARCHED (IPC) |
| | | | B60C |

The present search report has been drawn up for all claims

| Place of search | Date of completion of the search | Examiner |
|---|---|---|
| Munich | 10 December 2025 | Balázs, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 19 1769

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2025

| Patent document cited in search report | Publication date | Patent family member(s) | Publication date |
|---|---|---|---|
| JP 2024070442 A | 23-05-2024 | NONE | |
| FR 3058147 A1 | 04-05-2018 | CN 109890626 A | 14-06-2019 |
| | | EP 3532304 A1 | 04-09-2019 |
| | | FR 3058147 A1 | 04-05-2018 |
| | | JP 7064221 B2 | 10-05-2022 |
| | | JP 2020500952 A | 16-01-2020 |
| | | US 2020062928 A1 | 27-02-2020 |
| | | WO 2018078306 A1 | 03-05-2018 |
| DE 102024104538 A1 | 29-08-2024 | CN 118544738 A | 27-08-2024 |
| | | DE 102024104538 A1 | 29-08-2024 |
| | | JP 2024121697 A | 06-09-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4621127 B
- JP 2023021772 A
- JP 2023023658 A
- JP 2010111753 A
- JP 2009002594 A
- US 4414370 A
- JP 59006207 A
- JP 5058805 A
- JP 1313522 A
- US 5010166 B


### Non-patent literature cited in the description


- *Akita Prefectural University Web Journal*, 2019, vol. 6, 216-222
- *Toa Synthetic Research Annual Report TREND2000* (3), 42-45